# EUROPÄISCHE PATENTSCHRIFT

(11) **EP 1 229 423 B1**
(45) Veröffentlichungstag und Bekanntmachung des Hinweises auf die Patenterteilung: **23.06.2004**
(21) Anmeldenummer: 02000469.3
(22) Anmeldetag: 08.01.2002
(51) Int. Cl.: G06F 1/00, G08B 13/14

(54) **Verfahren zur Bereitstellung eines geräteindividuellen Gerätecodes für ein elektronisches Gerät**
Method for providing an individual device code to an electronic device
Procédé pour fournir un code individuel à un dispositif électronique

(30) Priorität: 05.02.2001 DE 10105059
(43) Veröffentlichungstag der Anmeldung: 07.08.2002
(73) Patentinhaber: Fujitsu Siemens Computers GmbH, 80807 München (DE)
(72) Erfinder: Valentin, Artur, 86399 Bobingen (DE)
(74) Vertreter: Epping Hermann & Fischer

(56) Entgegenhaltungen:
- PATENT ABSTRACTS OF JAPAN vol. 2000, no. 07, 29. September 2000 (2000-09-29) & JP 2000 118314 A (FUJITSU TEN LTD), 25. April 2000 (2000-04-25) & DATABASE WPI Derwent Publications Ltd., London, GB; AN 2000-358917

## Beschreibung

Die Erfindung betrifft ein Verfahren zur Bereitstellung eines geräteindividuellen Gerätecodes für ein elektronisches Gerät, für das zumindest zur erstmaligen Inbetriebnahme der Gerätecode benötigt wird, wobei ohne Eingabe des geräteindividuellen Gerätecodes das Gerät funktionsunfähig ist.

Die Sicherung eines Geräts durch einen Gerätecode wird häufig angewandt, wenn zur Vorbeugung von Gerätediebstählen dieses so ausgestattet sein soll, daß der Diebstahl für einen Täter unlukrativ ist, da das gestohlene Gerät nicht funktionsfähig ist. Ist die Sicherung bestimmter Geräte durch einen Gerätecode allgemein bekannt, geht in der Folge die Anzahl der Diebstähle dieser Geräte zurück.

Das Verfahren wird beispielsweise bei Autoradios angewandt, da diese durch Aufbruch des Autos leicht entwendet werden können. In dem Gerät ist normalerweise eine PIN gespeichert und der Kunde erhält mit Auslieferung des Gerätes beispielsweise als Aufkleber auf der Betriebsanleitung diese PIN mitgeteilt. Sofern das Gerät und die PIN getrennt voneinander aufbewahrt werden ist das Gerät also funktionsunfähig und somit für einen Dieb uninteressant. Bei Autoradios wird die PIN angefordert, wenn eine Trennung vom Bordnetz erfolgt ist, oder auch bei jedem Einschalten. Das Dokument JP 2000 118 314 offenbart ein derartiges Verfahren.

Eine andere Möglichkeit zur Verhinderung unberechtigter Nutzung ist von Mobiltelefonen bekannt. In Mobiltelefonen ist eine von einem Mobilfunkanbieter ausgegebene sogenannte SIM-Karte eingesetzt, ohne die das Gerät nicht betrieben werden kann. Die SIM-Karte wird von dem Mobilfunkanbieter freigeschaltet. Es ist aber nicht ausgeschlossen, daß das Gerät gestohlen und in Verbindung mit einer anderen SIM-Karte genutzt wird.

Bei dem erstgenannten Verfahren besteht das Problem darin, daß ein vor der Auslieferung an den Kunden gestohlenes Gerät nicht geschützt ist, da das Gerät und die Information über die PIN gemeinsam an den Kunden ausgeliefert werden. Ein Dieb in der Transportkette erhält also alle Informationen, um das Gerät betreiben zu können. Bei dem zweitgenannten Verfahren besteht nur der Schutz vor unberechtigtem Telefonieren auf Kosten des Besitzers des Mobiltelefons, aber nicht vor Entwendung und Benutzung des Geräts mit einer anderen SIM-Karte.

Aufgabe der Erfindung ist es daher, ein Verfahren zur Bereitstellung eines geräteindividuellen Gerätecodes für ein elektronisches Gerät anzugeben, bei dem auch vor Inbesitznahme durch den Endkunden ein Diebstahlschutz gewährleistet ist. Das Verfahren soll so einfach durchführbar sein, daß eine wirtschaftliche Abwicklung auch bei einer großen Anzahl verkaufter Geräte möglich ist.

Diese Aufgabe wird durch ein Verfahren der eingangs genannten Art gelöst, das durch die Ausführung der folgenden Verfahrensschritte in der genannten Reihenfolge gekennzeichnet ist:
- elektronische Speicherung einer Gerätenummer und eines dazugehörigen Gerätecodes in einer separaten Datenbank,
- Auslieferung des Gerätes an eine Weitervertriebsstelle,
- automatisches elektronisches Auslesen des in der Datenbank in Verbindung mit der Gerätenummer gespeicherten Gerätecodes, wobei zum Auslesen die zuvorige oder gleichzeitige elektronische Speicherung einer wählbaren Kennummer in der Datenbank in Verbindung mit der Gerätenummer erforderlich ist.

Die Voraussetzung für die Anwendung des erfindungsgemäßen Verfahrens ist also, daß das Gerät nur durch Eingabe eines Gerätecodes funktionsfähig ist. Der Gerätecode ist solange unbekannt, bis eine Kennummer, vorteilhafterweise die beim Verkauf festgelegte Rechnungsnummer, bekannt und in der Datenbank eingetragen ist. Somit ist sichergestellt, daß der Gerätecode erst dann bekannt gemacht wird, wenn das Gerät ordnungsgemäß verkauft wurde und nicht aus einem Diebstahl stammt. Für einen Dieb ist es somit sinnlos, ein Gerät zu stehlen, bevor es verkauft wurde.

Bei der Weitervertriebsstelle handelt es sich vorteilhafterweise um die Verkaufsstelle an den Endkunden. Möglich ist aber auch, das es sich hierbei um einen Zwischenhändler handelt oder die Wareneingangsstelle eines Großkunden. Der Gerätecode in Verbindung mit der Gerätenummer wird in einer günstigen Gestaltung des Verfahrens durch den Hersteller in der Datenbank gespeichert. Alternativ könnten diese Daten auch beispielsweise durch einen Großhändler oder eine Auslandsvertriebsstelle gespeichert werden. Vorteilhaft ist die elektronische und automatische Ausführbarkeit, da somit keine personalintensiven Leistungen zur Freigabe der Geräte oder Weitergabe der individuellen Gerätecodes erforderlich sind. Die Verfahren nach dem Stand der Technik sind dagegen so ausgerichtet, daß nur in Einzelfällen eine Code ermittelt werden muß oder eben mit Generalcodes gearbeitet wird, die von der Intention her nur einem beschränkten Personenkreis, nämlich Vertragspartnern der Hersteller oder anderen Service-Fachkräften zugänglich sein sollten.

Das Verfahren nach der Erfindung erweist sich insbesondere dann als vorteilhaft, wenn der Gerätecode in dem Gerät in einem nicht änderbaren Speicherbereich gespeichert ist. Bei Computern könnte der Speicher das BIOS sein, wobei dieses üblicherweise nicht änderbare Bereiche und änderbare Bereiche aufweist. Wenn sich der Gerätecode in dem nicht änderbaren Speicherbereich befindet, kann auch durch eine Neuprogrammierung des BIOS nicht der Gerätecode geändert werden.

Das Verfahren wird nachfolgend anhand von Ausführungsbeispielen näher erläutert. Es zeigt:
- Figur 1: ein erstes Ausführungsbeispiel des erfindungsgemäßen Verfahrens,
- Figur 2: ein zweites Ausführungsbeispiel eines erfindungsgemäßen Verfahrens und
- Figur 3: die Speicherung des Gerätecodes in einem Gerät.

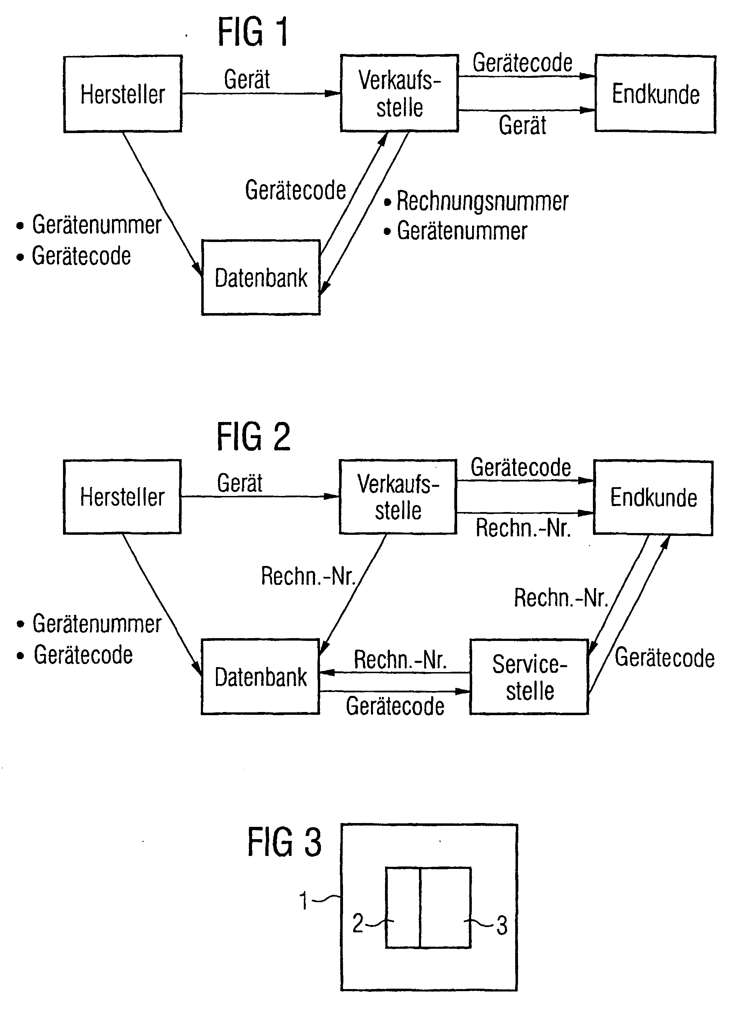

Figur 1 zeigt den Ablauf des erfindungsgemäßen Verfahrens. Zunächst wird für ein auszulieferndes Gerät eine Gerätenummer und der dazugehörige Gerätecode in einer Datenbank gespeichert. In diesem Fall geschieht dies durch den Hersteller des Gerätes. Es könnte sich hier aber auch um ein Auslieferungslager handeln. Anschließend wird das Gerät ausgeliefert, wobei dies in der Regel nicht direkt zu einem Endkunden gelangt, sondern zuerst zu einer Weitervertriebsstelle bzw. einem Zwischenhändler, beispielsweise einer Verkaufsstelle. Zu diesem Zeitpunkt ist das Gerät noch nicht funktionsfähig, weil noch der Gerätecode fehlt, welcher für die zumindest erste Inbetriebnahme des Gerätes notwendig ist. Der Gerätecode ist aus der Datenbank jedoch nicht ohne weiteres auslesbar. Voraussetzung für das Auslesen des Gerätecodes ist die Eingabe einer Kennnummer durch die Verkaufsstelle. Solche Bedingungen für das Auslesen von Daten sind durch elektronische Datenverarbeitungssysteme problemlos umsetzbar. Vorteilhafterweise wird als Kennnummer die Rechnungsnummer verwendet, die beim Verkauf des Gerätes erzeugt wird.

Die Rechnungsnummer wird nun in der Datenbank in dem zu dem entsprechenden Gerät, das durch die Gerätenummer gekennzeichnet ist, gehörenden Datensatz gespeichert. Erst nach der Speicherung wird der Gerätecode ausgegeben. Das Gerät wird nun gemeinsam mit dem Gerätecode beispielsweise einem Endkunden übergeben. Da die Eingabe der Rechnungsnummer erforderlich ist, kann jederzeit nachvollzogen werden, wann welches Gerät verkauft worden ist und durch wen dies geschehen ist.

Die Verbindung von der Verkaufstelle zu der Datenbank erfolgt durch eine Netzwerkverbindung. Dafür sind aus dem Stand der Technik viele Sicherheitsmaßnahmen bekannt, durch die ausgeschlossen wird, daß Unbefugte über das Netzwerk auf die Datenbank zugreifen können.

Der Gerätecode könnte beispielsweise auch auf dem Kassenzettel aufgedruckt sein. Falls der Benutzer bzw. der Endkunde den Gerätecode vergißt, ist es unproblematisch, ihm diesen nach Mitteilung der Gerätenummer und der Rechnungsnummer nochmals zur Verfügung zu stellen.

Die Figur 2 zeigt eine Variation des Ausführungsbeispieles von Figur 1. Auch in diesem Fall wird ein Gerät von einem Hersteller zu einer Weitervertriebsstelle, die auch in diesem Fall wieder eine Verkaufsstelle ist, ausgeliefert. Zuvor wird der Gerätecode in Verbindung mit der Gerätenummer in einer Datenbank gespeichert. Die Ermittlung des Gerätecodes geschieht jedoch in diesem Fall nicht durch die Verkaufsstelle, sondern diese speichert lediglich die Rechnungsnummer in Verbindung mit der Gerätenummer in der Datenbank. Der Endkunde erhält das Gerät und kennt aufgrund der Rechnung auch die Rechnungsnummer, die in der Datenbank zu seinem Gerät gespeichert ist. Die Ermittlung des Gerätecodes aus der Datenbank geschieht nun durch den Endkunden selber.

Im Ausführungsbeispiel von Figur 2 kann der Endkunde jedoch nicht direkt auf die Datenbank zugreifen, sondern es besteht eine Servicestelle, die von dem Endkunden die Rechnungsnummer und die Gerätenummer entgegennimmt und aufgrund dieser Nummern den Gerätecode ermittelt und an den Endkunden weitergibt. Der Kontakt zwischen dem Endkunden und der Servicestelle kann über eine Telefonverbindung, beispielsweise unter einer kostenfreien Telefonnummer, per Sprachcomputer oder auch über eine E-Mail Verbindung erfolgen.

Durch die Servicestelle werden auch Gerätediebstähle bearbeitet. Die von einem Diebstahl betroffene Stelle in der Transportkette, also entweder der Hersteller, ein Spediteur, die Verkaufsstelle oder der Endkunde benachrichtigen die Servicestelle über den Diebstahl eines Gerätes mit einer bestimmten Gerätenummer. Daraufhin wird in der Datenbank bei dem entsprechendem Gerät ein Vermerk gesetzt, daß das Gerät gestohlen worden ist. Falls nun zu einem späterem Zeitpunkt der Besitzer eines gestohlenen Gerätes versucht, den Gerätecode über die Servicestelle zu ermitteln, ist sofort ersichtlich, das es sich um ein gestohlenes Gerät handelt und der Dieb kann auf diesem Weg leichter ermittelt werden. Natürlich könnte die Eintragung einer Diebstahlsmeldung auch direkt in der Datenbank erfolgen, ohne daß die Servicestelle eingeschaltet wird.

Die Datenbank kann weiterhin eingesetzt werden, um verschiedene Stationen eines Gerätes zu speichern, da der Transport in der Regel komplizierter ist als in den Figuren 1 und 2 dargestellt. Denn normalerweise wird das Gerät vom Hersteller über einen Spediteur zu einem Zwischenlager transportiert, von dort erfolgt der Transport durch einen zweiten Spediteur zu einem Großhändler, beispielsweise auch zu einem zentralen Auslieferungslager einer Handelskette. Diese transportiert durch einen dritten Spediteur die Ware zu den Filialen, bei denen nun der Endkunde das Gerät kaufen kann. Wenn beispielsweise bei dem Zwischenlager ein Eintrag in der Datenbank vorgenommen wird, daß das Gerät angeliefert und daß es auch wieder ausgeliefert wurde, so ist eine Häufung von Diebstählen an einem bestimmten Teil des Transportweges leicht zu ermitteln.

Zu einer erfolgreichen Anwendung des erfindungsgemäßen Verfahrens ist es notwendig, daß das Gerät nur nach Eingabe des Gerätecodes in Betrieb genommen werden kann. Dies bedeutet, daß der Gerätecode auch in dem Gerät gespeichert werden muß, damit ein Vergleich zwischen dem gespeicherten und dem eingegebenen Gerätecode vornehmbar ist. Zwar sind beispielsweise bei Computern bereits sogenannte BIOS-Paßwörter bekannt, jedoch befinden sich diese in einem beschreibbaren Teil des BIOS. Dieses ist dadurch erkenntlich, daß das BIOS-Paßwort in der Regel geändert werden kann. Vorteilhafterweise besitzt, wie in Figur 3 dargestellt, ein Gerät 1 einen Speicher im BIOS, wobei ein Teil 3 des Speichers beschreibbar und lesbar und ein anderer Teil 2 nicht veränderbar ist. In dem nicht änderbaren Teil sind grundlegende Systemoperationen gespeichert, deren Änderung zu einer Funktionsunfähigkeit des Gerätes führen würden. In dem Teil 3 des Speichers, der änderbar ist, sind hingegen Funktionen abgelegt, die änderbar sein dürfen und in der auch Gerätekonfigurationen oder bestimmte Optionen zur Durchführung von Funktionen abgelegt sind. Wenn nun der Gerätecode in dem nicht änderbaren und nicht von außen lesbaren Teil des BIOS abgelegt ist, läßt sich der Gerätecode nicht durch ein Softwareprogramm ändern oder auslesen.

Aus finanziellen Gesichtspunkten ist das erfindungsgemäße Verfahren für alle Beteiligten von Vorteil. Der Hersteller verhindert auf diese Weise, daß Geräte auf dem Transportweg gestohlen werden und er für Ersatzgeräte aufkommen muß. Aber auch innerhalb der Verkaufsstelle kommen Diebstähle vor, sei es durch Lagerarbeiter, Angestellte oder Kunden. Nachdem das Gerät aber bei der Verkaufsstelle angeliefert worden ist, ist der Hersteller nicht mehr zum Ersatz verpflichtet. Daher liegt es auch im Interesse der Verkaufsstelle, weitere Diebstähle von Geräten zu erschweren. Für den Endkunden letztlich, also den Benutzer des Gerätes, ist das Verfahren insbesondere dann von Vorteil, wenn bei jeder Inbetriebnahme des Gerätes der Gerätecode abgefragt wird. So ist der Diebstahl beispielsweise eines Notebooks nicht mehr attraktiv, wenn bekannt ist, das solche Geräte durch einen Gerätecode gesichert sind und dieser nicht durch Unberechtigte ermittelbar ist.

Durch Speicherung in dem nicht änderbaren Teil des BIOS führen weder eine Neuprogrammierung des BIOS noch eine Trennung von der internen Batterie zum Erfolg.

## Patentansprüche

1. Verfahren zur Bereitstellung eines geräteindividuellen Gerätecodes für ein elektronisches Gerät (1), für das zumindest zur erstmaligen Inbetriebnahme der Gerätecode benötigt wird, wobei ohne Eingabe des geräteindividuellen Gerätecodes das Gerät (1) funktionsunfähig ist,
**gekennzeichnet durch**
die Ausführung der folgenden Verfahrensschritte in der genannten Reihenfolge:
- elektronische Speicherung einer Gerätenummer und eines dazugehörigen Gerätecodes in einer separaten Datenbank,
- Auslieferung des Gerätes an eine Weitervertriebsstelle,
- automatisches elektronisches Auslesen des in der Datenbank in Verbindung mit der Gerätenummer gespeicherten Gerätecodes, wobei zum Auslesen die zuvorige oder gleichzeitige elektronische Speicherung einer wählbaren Kennummer in der Datenbank in Verbindung mit der Gerätenummer erforderlich ist.

2. Verfahren nach Anspruch 1,
**dadurch gekennzeichnet, daß**
in dem Gerät 1 der Gerätecode (1) in einem nicht änderbaren und von außen nicht lesbaren Speicherbereich (2) gespeichert ist.

3. Verfahren nach Anspruch 1,
**dadurch gekennzeichnet, daß**
die Kennummer die Rechnungsnummer einer Verkaufsstelle ist.

4. Verfahren nach Anspruch 1,
**dadurch gekennzeichnet, daß**
der Gerätecode in Verbindung mit der dazugehörigen Gerätenummer von dem Hersteller des Gerätes in der Datenbank gespeichert wird.

## Claims

1. Method for providing a device-specific device code for an electronic device (1) for which the device code is needed at least in order to start it up for the first time, the device (1) being inoperable without input of the device-specific device code,
**characterized by**
execution of the following method steps in the stated order:
- electronic storage of a device number and an associated device code in a separate database,
- delivery of the device to an outlet,
- automatic electronic reading of the device code stored in the database in connection with the device number, with reading requiring prior or simultaneous electronic storage of a selectable ID number in the database in connection with the device number.

2. Method according to Claim 1,
**characterized in that**
the device 1 stores the device code (1) in a memory area (2) which cannot be changed and cannot be read externally.

3. Method according to Claim 1,
**characterized in that**
the ID number is the invoice number from a point of sale.

4. Method according to Claim 1,
**characterized in that**
the device code is stored in the database in connection with the associated device number by the manufacturer of the device.

## Revendications

1. Procédé pour fournir un code individuel à un appareil électronique (1) pour lequel le code d'appareil est nécessaire au moins à la première mise en service, l'appareil (1) ne pouvant pas fonctionner sans l'entrée du code d'appareil propre à l'appareil,
**caractérisé par** la réalisation des étapes de procédé suivantes dans l'ordre mentionné :
- mémorisation électronique d'un numéro d'appareil et d'un code d'appareil associé dans une base de données séparée,
- livraison de l'appareil à un point de vente,
- lecture électronique automatique du code d'appareil mémorisé dans la base de données en relation avec le numéro d'appareil, la mémorisation électronique antérieure ou simultanée d'un numéro identificateur sélectionnable dans la base de données en relation avec le numéro d'appareil étant nécessaire pour la lecture.

2. Procédé selon la revendication 1,
**caractérisé par le fait que**, dans l'appareil 1, le code d'appareil (1) est mémorisé dans une zone de mémoire (2) qui ne peut pas être modifiée et qui ne peut pas être lue de l'extérieur.

3. Procédé selon la revendication 1,
**caractérisé par le fait que** le numéro identificateur est le numéro de facture d'un point de vente.

4. Procédé selon la revendication 1,
**caractérisé par le fait que** le code d'appareil est mémorisé dans la base de données par le fabricant de l'appareil en relation avec le numéro d'appareil associé.
